## Europäisches Patentamt
## European Patent Office
## Office européen des brevets

(19)

(11) Numéro de publication: **0 227 541**
**B1**

(12) **FASCICULE DE BREVET EUROPEEN**

(45) Date de publication du fascicule du brevet:
**16.05.90**

(51) Int. Cl.⁵: **F16K 17/10**

(21) Numéro de dépôt: **86402770.1**

(22) Date de dépôt: **11.12.86**

(54) Soupape de sûreté à pilotage intégré.

(30) Priorité: **16.12.85 FR 8518614**

(43) Date de publication de la demande:
**01.07.87 Bulletin 87/27**

(45) Mention de la délivrance du brevet:
**16.05.90 Bulletin 90/20**

(84) Etats contractants désignés:
**BE CH DE GB IT LI NL**

(56) Documents cités:
**DE-A- 2 315 017**
**FR-A- 2 538 493**

(73) Titulaire: **COMMISSARIAT A L'ENERGIE ATOMIQUE,
31/33, rue de la Fédération, F-75015 Paris(FR)**

(72) Inventeur: **Vayra, Jean, "l'Oustau" Quartier Lisette,
F-13590 Meyreuil(FR)**

(74) Mandataire: **Mongrédien, André et al, c/o
BREVATOME 25, rue de Ponthieu, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se rapporte à une soupape de sûreté à pilotage intégré.

Une soupape de sûreté est disposée sur une enceinte contenant un fluide sous pression. Elle permet de limiter la pression régnant à l'intérieur de l'enceinte. En cas de surpression, la soupape s'ouvre, ce qui permet l'évacuation d'une quantité de fluide et, par conséquent, la limitation de la pression à l'intérieur de l'enceinte.

Les soupapes de sûreté à pilotage comportent un clapet principal par lequel le fluide est évacué hors de l'enceinte et un clapet de pilotage. L'ouverture du clapet principal est commandée par le dispositif de pilotage qui est réglé sur la valeur maximale de la pression que l'on ne veut pas dépasser à l'intérieur de l'enceinte.

Grâce à cette disposition, les soupapes à pilotage fonctionnent en tout ou rien: le clapet principal est soit ouvert, soit fermé, sans position intermédiaire. Ainsi, les risques de battement sont limités et la durée de la soupape est accrue.

On connaît (FR-A 2 538 493) une soupape à pilotage intégré de type monobloc comme indiquée dans la première partie de la revendication 1, qui diminue les risques de détérioration par la rupture d'une tuyauterie extérieure. Elle est autoclave, ce qui signifie que la pression régnant dans l'enceinte applique le clapet principal sur son siège.

On connaît également, (DE-A 2 315 017), une soupape de sûreté à pilotage intégré comportant un corps muni d'une entrée et d'une sortie pour un fluide. Un piston traversé par un canal axial monté coulissant est en appui sur un siège. Un clapet de pilotage est appliqué sur un siège au moyen d'un ressort hélicoïdal réglable.

La soupape comporte un piston auxiliaire monté sur le piston et de surface très importante (trois cents fois) par rapport à celle du piston. La face inférieure du piston est reliée par un canal à une chambre située en aval du clapet de pilotage.

La soupape ainsi définie est autoclave, parce que la surface de la face du piston dirigée vers la chambre de pression de fermeture du clapet principal est supérieure à la surface de ce clapet principal dirigée vers l'enceinte. Ainsi, en cas de variation lente de la pression à l'intérieur de l'enceinte, la pression est communiquée à la chambre de fermeture, de sorte que la soupape est autoclave.

Toutefois, au cas où le clapet de pilotage serait bloqué, pour une cause quelconque, le clapet principal ne pourrait plus s'ouvrir, ce qui conduirait à une augmentation de pression pouvant provoquer la rupture de l'enceinte.

De même, en cas d'augmentation brutale de la pression à l'intérieur de l'enceinte, un certain délai est nécessaire en raison de la faible section de passage du canal qui mène à la chambre d'ouverture, pour que la pression dans la chambre d'ouverture de clapet principal atteigne une valeur suffisante pour provoquer l'ouverture de ce clapet principal. Par suite, l'enceinte pourrait subir de graves dommages avant que la soupape n'ait pu jouer son rôle qui est d'y faire chuter la pression.

L'invention a par conséquent pour but de créer une soupape de sûreté à pilotage intégré de type autoclave, dans laquelle le clapet principal peut s'ouvrir instantanément en cas d'augmentation brutale de la pression dans l'enceinte, même si le clapet de pilotage est bloqué.

De manière plus précise, l'invention concerne une soupape de sûreté à pilotage intégré pour une enceinte contenant un fluide sous pression comme indiquée dans la revendication 1.

De préférence, la soupape comporte des moyens pour tester la pression de tarage du clapet principal, ces moyens étant constitués par un robinet permettant de relier la chambre A à une source de pression d'un fluide extérieur.

De préférence encore, la soupape comporte un robinet permettant de mettre à l'atmosphère la chambre de pression de fermeture du clapet principal.

Grâce aux caractéristiques précédentes, et en particulier grâce à la présence du clapet à bille, en cas d'augmentation brutale de la pression à l'intérieur de l'enceinte, la bille du clapet vient se plaquer contre l'orifice supérieur de ce clapet sous l'effet de la différence de pression régnant entre l'intérieur de l'enceinte et la chambre de pression de fermeture de la soupape et obture le canal de communication qui relie l'enceinte à cette chambre. La force agissant sur la face du clapet principal dirigée vers l'enceinte devient ainsi supérieure à la force agissant sur sa surface dirigée vers la chambre de fermeture. En conséquence, le clapet principal peut s'ouvrir sans délai sous l'effet de la surpression. La pression à l'intérieur de l'enceinte chute ainsi rapidement, de sorte que les risques de dommage ou d'explosion de l'enceinte sont éliminés.

En outre, grâce à la présence d'un robinet permettant de mettre la chambre de pression de fermeture du clapet principal à l'atmosphère, on peut ouvrir manuellement le clapet principal en cas de blocage du clapet de pilotage. En effet, la mise à l'atmosphère du canal reliant l'intérieur de l'enceinte à la chambre de pression de fermeture conduit à l'apparition d'une différence de pression entre l'orifice supérieur et l'orifice inférieur du clapet à bille, de telle sorte que la bille de ce clapet est instantanément plaquée contre l'orifice supérieur, ce qui obture le canal de passage. La pression régnant à l'intérieur de la chambre de pression de fermeture est évacuée à l'atmosphère par le robinet, de telle sorte qu'une différence de pression apparaît entre la face du clapet principal dirigée vers l'enceinte et la face du clapet principal dirigée vers la chambre de pression de fermeture. Da manière identique à ce qui a été expliqué précédemment, le clapet principal s'ouvre, ce qui permet de faire chuter la pression à l'intérieur de l'enceinte. On voit donc que ce robinet de mise à l'atmosphère, coopérant avec le clapet à bille, permet d'isoler la chambre de pression de fermeture de l'intérieur de l'enceinte et constitue un moyen d'ouverture manuelle du clapet principal qui apporte une grande sécurité en cas de blocage du clapet de pilotage.

D'autres caractéristiques et avantages de l'invention apparaîtront encore à la lecture de la description qui suit d'exemples de réalisation donnés à titre illustratif en référence aux figures annexées, sur lesquelles :

- la figure 1 représénte un premier mode de réalisation d'une soupape de sûreté conforme à l'invention,
- la figure 2 représente une variante de réalisation de la soupape représentée sur la figure 1.

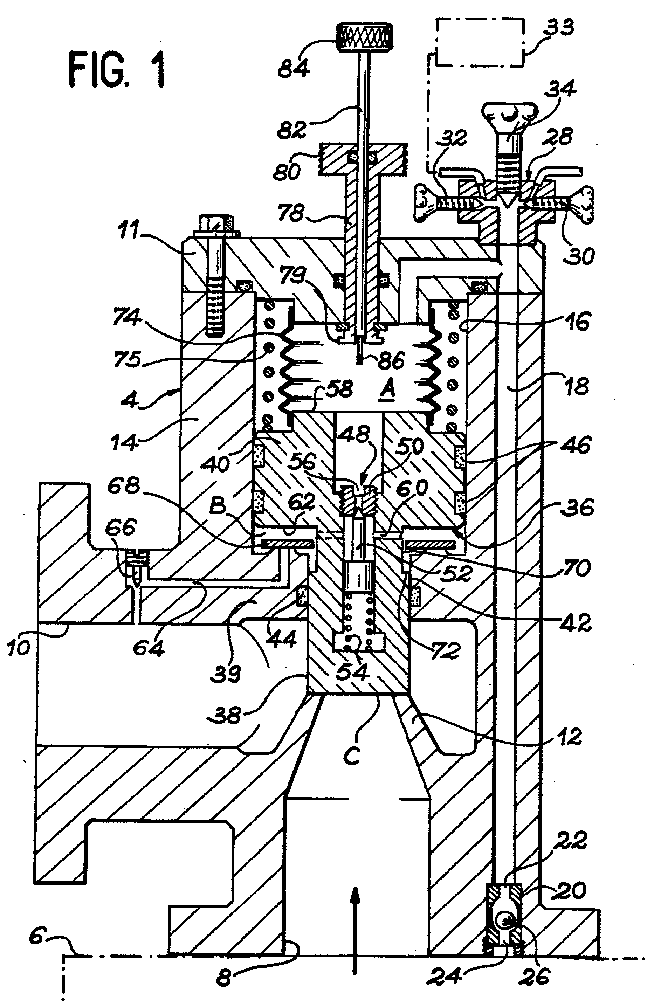

On a représenté sur la figure 1 un premier mode de réalisation de l'invention. La soupape comprend un corps de soupape 4 fixé sur la paroi 6 d'une enceinte, représentée en traits mixtes, et contenant un fluide sous pression. Le corps 4 délimite dans la partie inférieure de la soupape une entrée 8 et une sortie 10 pour le fluide. L'entrée 8 est en communication avec l'intérieur de l'enceinte, tandis que la sortie est en communication avec l'atmosphère. Elle est par exemple reliée à une bâche de vidange. Un siège 12 pour le clapet principal est prévu entre l'entrée 8 et la sortie 10. Comme on le remarque, les lèvres de ce siège sont dirigées vers le haut en considérant la figure 1, l'enceinte se trouvant au bas de cette figure.

D'autre part, le corps 4 délimite dans la partie supérieure de la soupape une chambre cylindrique 16. Un canal 18 relie l'enceinte à la chambre de pression de fermeture A délimitée à l'intérieur de la chambre cylindrique 16 par un soufflet 74. D'autre part, une valve à bille est disposée dans le canal 18. Cette valve est constituée par une chambre percée à chacune de ses extrémités d'un orifice de passage supérieur 22 de faible section et d'un orifice de passage inférieur 24. L'entrée de chacun de ces orifices détermine un siège pour une bille 26 apte à obturer chacun des orifices 22 ou 24.

Un robinet à trois voies 28 est relié au canal 18. Ce robinet comporte une première voie 30 permettant la mise à l'atmosphère du canal 18, une seconde voie 32 permettant de relier le canal 18 à une source de pression d'un fluide extérieur 33 et une troisième voie 34 permettant d'isoler le canal 18 à la fois de la mise à l'atmosphère et de la source de fluide sous pression. Le fonctionnement de ce robinet à trois voies sera expliqué ultérieurement.

D'autre part, la soupape de sûreté de l'invention comprend un piston 40 prolongé dans sa partie inférieure par le clapet principal 38. Un ressort d'appui 75 agit sur le piston 40. Le clapet principal 38 est monté coulissant dans un alésage circulaire prévu dans une paroi 39. Un joint d'étanchéité 44 assure une étanchéité entre le diamètre externe du clapet principal 38 et la paroi 42. Comme on le remarque, le clapet 38 est situé du côté de la sortie 10 par rapport aux lèvres du siège 12. D'autre part, le piston 40 est monté coulissant dans la chambre cylindrique 16. Des joints d'étanchéité 46 assurent une étanchéité entre cette chambre et le piston.

Un clapet de pilotage 48 est logé à l'intérieur du piston 40. Ce clapet a pour fonction d'ouvrir ou de fermer un canal mettant en communication la face supérieure 58 et la face inférieure 62 du piston 40. Il se compose d'un siège 50 constitué par une bague filetée extérieurement et traversée par un canal de passage axial. Le clapet de pilotage se compose également d'un pointeau 52 apte à obturer le canal axial du siège 50. Le pointeau 52 est plaqué sur le siège par un ressort 54. Le tarage du ressort 54 peut être réglé en vissant ou en dévissant plus ou moins le siège 50 de manière à comprimer plus ou moins le ressort hélicoïdal 54. A cet effet, une fente 56 représentée de profil sur la figure 1 permet de visser ou de dévisser le siège 50.

Le piston 40 détermine deux chambres avec la chambre cylindrique 16. A la partie supérieure de la chambre 16 est formée une chambre A de pression de fermeture du clapet principal 38. Cette chambre est appelée chambre de pression parce qu'elle est en communication avec l'enceinte par l'intermédiaire du canal 18 et que la pression qui y règne agit sur la face supérieure 58 du piston 40 dans le sens de la fermeture du clapet principal. La surface $S_a$ de la face 58 est supérieure à la surface $S_c$ de la face C du clapet principal, de sorte que la soupape est autoclave. Le soufflet d'étanchéité 74 relie de manière étanche la partie supérieure du corps de soupape 4 à la face supérieure du piston 40. Ce soufflet a pour fonction de réduire la surface de la face supérieure du piston 40 soumise à la pression régnant à l'intérieur de l'enceinte par l'intermédiaire du canal 18.

La pression régnant à l'intérieur de la chambre de pression d'ouverture B agit sur la face inférieure 62 de surface $S_b$ du piston pour le solliciter dans le sens de l'ouverture du clapet principal. La chambre d'ouverture B communique avec la chambre de fermeture A par le canal 60 lorsque le pointeau du clapet de pilotage est ouvert. Ce pointeau s'ouvre lorsque la pression dans la chambre A dépasse une valeur de tarage prédéterminée du ressort 54.

La chambre B d'ouverture du clapet principal est en communication avec l'atmosphère par l'intermédiaire d'un canal 64 qui débouche dans la tubulure de sortie 10. La section de passage de ce canal 64 est calibrée par l'intermédiaire d'une vis pointeau 66. Des moyens sont prévus pour obturer l'entrée du canal 64. Dans l'exemple de réalisation représenté sur la figure 1, ces moyens sont constitués par une rondelle 68 montée coulissante sur une partie de diamètre réduit 70 du clapet principal délimitant un épaulement 72. Pour que la soupape puisse fonctionner correctement, deux conditions sont nécessaires. Tout d'abord, pour que la soupape soit autoclave, il faut que la surface $S_a$ de la face supérieure 58 du piston 40 soit supérieure à la surface $S_c$ du clapet principal dirigée vers l'enceinte et soumise par conséquent à la pression régnant à l'intérieur de cette enceinte. D'autre part, pour que le déplacement du piston 40 en cas de surpression soit possible, il faut que la somme des surfaces soumises à une pression tendant à l'ouverture de ce clapet soit supérieure à la surface $S_a$ tendant à sa fermeture. En d'autres termes, il faut que la surface $S_b$ de la face inférieure 62 du piston 40 augmentée de la surface $S_c$ soit supérieure à $S_a$.

Enfin, le couvercle 11 du corps 4 est muni de moyens qui permettent le réglage et le déclenchement à volonté du clapet de pilotage en cours de fonctionnement. Ces moyens se composent de deux tiges concentriques 78, 82 montées coulissantes et tournantes à la partie supérieure du corps 4, dans l'axe du pointeau 52 et plus précisément dans l'axe du clapet de pilotage. La tige extérieure 78 est munie, à son extrémité inférieure, d'ergots 79 qui s'engagent dans la fente 56 lorsque cette tige est poussée vers le bas. Elle est munie à son extrémité supérieure d'un bouton molleté 80 qui permet de l'entraîner en rotation de manière à visser ou à dévisser le siège 50 du clapet de pilotage. Cela permet de régler le tarage de ce clapet en comprimant plus ou moins le ressort hélicoïdal 54.

La tige intérieure 82 est montée coulissante dans la tige extérieure. A une extrémité, elle est munie d'un bouton molleté 84 qui permet de la déplacer en translation de manière à venir engager son extrémité inférieure 86 dans le canal du siège 50 de manière à appuyer sur le pointeau 52 et provoquer à volonté une ouverture du clapet de pilotage.

Le fonctionnement de la soupape de sûreté qui vient d'être décrite est le suivant :

Lorsqu'une surpression apparaît dans l'enceinte, elle est transmise par le canal 18 à la chambre de fermeture A. Le pointeau 52 est taré et a une valeur déterminée de manière à s'ouvrir lorsqu'une pression de référence est atteinte. Cette pression étant dépassée, le clapet de pilotage s'ouvre et le fluide sous pression pénètre à travers le canal 60 dans la chambre d'ouverture B jusqu'à ce que la pression dans cette chambre soit égale à la pression dans l'enceinte. A ce moment, le canal 64 mettant la chambre d'ouverture B en communication avec l'atmosphère est fermé par la rondelle 68. Comme on l'a expliqué précédemment, la surface $S_b$ de la face du piston dirigée vers la chambre d'ouverture augmentée de la surface $S_c$ du clapet principal dirigé vers l'enceinte est supérieure à la surface $S_a$ de la face du piston dirigée vers la chambre de fermeture. L'effort résultant exercé sur le piston et le clapet principal dépasse donc rapidement la force exercée par le ressort hélicoïdal d'appui 75 et le clapet principal s'ouvre. Le fluide en surpression est alors évacué par la sortie 10.

Au cours de son mouvement d'ouverture, le clapet principal entraîne vers le haut la rondelle 68 par l'intermédiaire de l'épaulement 72, ce qui dégage l'ouverture d'entrée du canal de mise à l'atmosphère 64. Toutefois, la section de passage de ce canal étant calibrée, comme on l'a expliqué précédemment, la pression à l'intérieur de la chambre d'ouverture B ne diminue pas rapidement, de sorte que la soupape reste ouverte.

Lorsque la pression à l'intérieur de l'enceinte est revenue à une valeur normale, le clapet de pilotage se referme. La pression à l'intérieur de la chambre d'ouverture B diminue par suite de l'évacuation du fluide au travers du canal de purge 64, ce qui conduit à la fermeture du clapet principal sous l'action de la pression dans la chambre A augmentée de l'effet du ressort d'appui 75. Un peu avant la fin de la course de fermeture de la soupape 30, la rondelle 68 referme l'orifice d'entrée du canal de purge 64. On enferme ainsi un matelas de fluide dans la chambre B. Ce matelas amortit la fermeture du clapet principal 38.

En cas d'augmentation brutale de la pression à l'intérieur de l'enceinte, comme par exemple en cas de coups de bélier, le fonctionnement de la soupape de sûreté est différent. Sous l'effet de l'augmentation brutale de pression, la bille 26 du clapet 20 est projetée vers le haut et obture l'orifice 22. Par suite, la pression à l'intérieur de la chambre de fermeture A ne peut plus augmenter et reste à la valeur qu'elle avait avant l'augmentation de pression dans l'enceinte. Au contraire, la face du clapet principal (surface $S_c$) est directement sensible à cette augmentation de pression. L'effort exercé sur le clapet principal dépasse ainsi l'effort exercé par le ressort hélicoïdal d'appui 75 et par la pression exercée sur la face supérieure 58 du piston 40 qui peut ainsi se soulever sans que le clapet de pilotage ait été mis en action. On obtient ainsi une ouverture de cette soupape avec un temps de réponse aussi faible que possible. Cette caractéristique assure une protection de l'enceinte contre les effets d'une augmentation brutale de pression.

Au cours du mouvement d'ouverture du clapet principal 38, le fluide présent dans la chambre de fermeture A est comprimé, ce qui provoque l'ouverture du clapet de pilotage 48 lorsque la pression de référence est dépassée. Le fluide s'écoule alors dans la chambre d'ouverture B. L'ouverture du canal de purge et la fermeture du clapet principal s'effectuent ensuite de façon identique à ce qui a été décrit précédemment dans le cas d'une augmentation normale, c'est-à-dire lente, de la pression à l'intérieur de l'enceinte.

Par ailleurs, le robinet à trois voies 28 permet de tester le fonctionnement de la soupape et en particulier la pression de tarage du clapet de pilotage 48. Pour cela, on relie le canal 18 à une source de pression de fluide de valeur connue, supérieure à la pression régnant à l'intérieur de l'enceinte en régime de fonctionnement normal. Sous l'effet de cette pression, la bille 26 est plaquée contre l'entrée de l'orifice inférieur 24 obturant ainsi le canal 18.

Du fait que l'intérieur de l'enceinte 6 est isolé de la chambre de pression de fermeture du clapet principal par le clapet à bille, la pression qui s'exerce à l'intérieur de cette chambre est égale à la pression du fluide extérieur 33. Cette pression s'applique sur le clapet de pilotage 48. Sous l'effet de cette pression, ce clapet peut s'ouvrir ou ne pas s'ouvrir, selon que sa pression de tarage est inférieure ou supérieure à la pression du fluide extérieur 33.

Si le clapet de pilotage 48 ne s'ouvre pas, on recommence l'opération en utilisant une source de pression de fluide extérieur 33 de valeur plus élevée, jusqu'à obtenir l'ouverture du clapet de pilotage 48. Une augmentation de la pression du fluide extérieur 33, par exemple une augmentation continue de cette pression, permet de déterminer la valeur de pression à partir de laquelle le clapet de pilotage 48 s'ouvre et par conséquent de vérifier la valeur de tarage de ce clapet de pilotage. L'ouverture du clapet de pilotage 48 peut être détectée par tout moyen connu de l'homme de l'art, par exemple en installant un manomètre sur l'enceinte. L'ouverture du clapet de pilotage commande l'ouverture du clapet principal et par suite une baisse de pression à l'intérieur de l'enceinte qui peut être détectée au moyen du manomètre. Une chute de pression lue sur le manomètre permet donc de déduire que le clapet de pilotage s'est ouvert.

La mise à l'air libre de la chambre de fermeture A par l'intermédiaire du pointeau 30 constitue un moyen d'ouverture manuel de la soupape. En effet, sous l'effet de la dépressurisation de la chambre A, la bille 26 vient obturer l'orifice supérieur 22 de la valve 20 et le clapet principal 38 s'ouvre sous la seule action de la pression sur sa face inférieure C dirigée vers l'enceinte. Dans le mode de réalisation représenté sur la figure 1, le robinet de mise à l'air libre de la chambre de pression de fermeture A fait partie d'un robinet à trois voies. Toutefois, selon une variante de réalisation, ce robinet pourrait être situé à distance de la soupape et relié à cette soupape par une canalisation.

La refermeture de la soupape est alors assurée par injection d'un fluide extérieur 33 par le pointeau 32.

Si le tarage du ressort hélicoïdal 54 n'est pas satisfaisant, on peut le modifier au moyen de la tige extérieure 78 en vissant ou en dévissant, selon le cas, le siège 50 du clapet de pilotage 48. On recommence alors l'opération de mesure précédente pour vérifier que le tarage est correct.

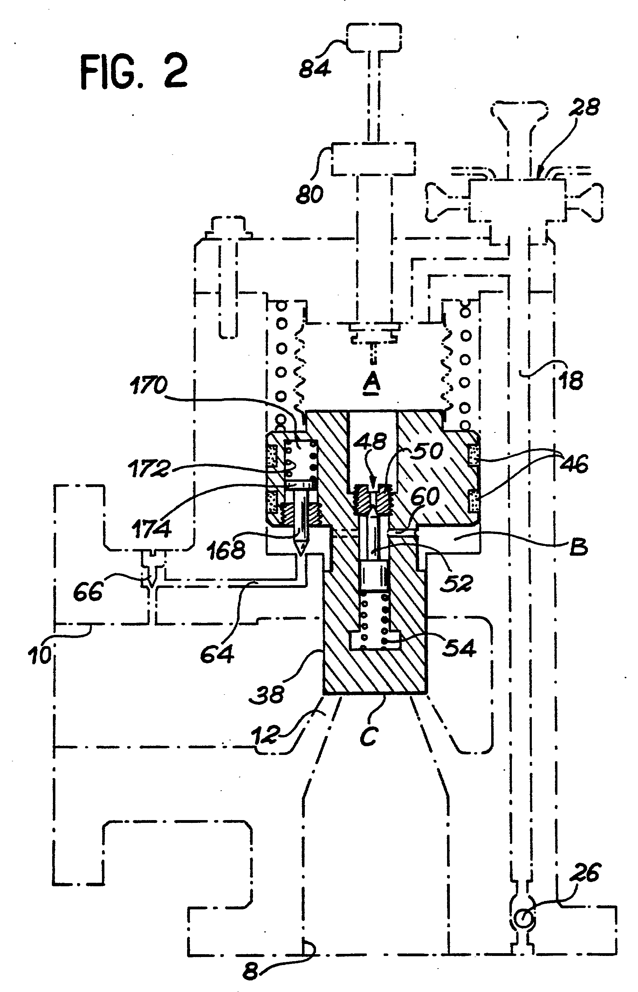

On a représenté sur la figure 2 un second mode de réalisation de l'invention. Il est identique dans son principe et dans son fonctionnement au premier mode de réalisation. La différence entre ces deux modes de réalisation réside dans les moyens qui permettent d'obturer l'orifice du canal de purge 64. Dans le mode de réalisation de la figure 2, des moyens sont constitués par un pointeau obturateur 168 monté coulissant dans un alésage 170 usiné dans le piston 40. L'entrée de l'orifice du canal 64 forme un siège pour ce pointeau qui est maintenu élastiquement en appui sur ce siège par un ressort hélicoïdal de compression 172. A son extrémité supérieure, le pointeau possède une collerette 174 qui est entraînée vers le haut lors du mouvement d'ouverture du clapet principal 70, ce qui a pour effet de décoller le pointeau 168 de son siège. Ce pointeau s'ouvre ainsi avec un temps de retard par rapport au clapet principal 70. Au contraire, lors du mouvement de fermeture, il se ferme avec un temps d'avance sur ce clapet, ce qui a pour effet, de manière identique à ce que l'on a expliqué pour le mode de réalisation précédent, d'enfermer dans la chambre d'ouverture B un matelas de fluide qui amortit la fermeture du clapet principal 70.

**Revendications**

1. Soupape de sûreté à pilotage intégré pour une enceinte (6) contenant un fluide sous pression, la soupape comprenant un corps de soupape (4) pourvu d'une entrée (8), d'une sortie (10) pour le fluide et d'un canal (18), l'entrée (8) étant en communication avec l'enceinte (6) et la sortie (10) étant à l'atmosphère, un siège (12) situé entre l'entrée et la sortie, ledit corps (4) déterminant une chambre cylindrique (16), un piston (40) monté coulissant dans ladite chambre cylindrique (16), un clapet principal (38) fixé sous le piston (40) apte à obturer ledit siège (12), un ressort d'appui (75) pour appliquer le clapet principal (38) sur le siège (12), un clapet de pilotage (48) logé dans un canal (60) dudit piston (40), des moyens élastiques (54) pour appliquer le clapet de pilotage (48) sur son siège (50), le piston (40) déterminant avec la chambre cylindrique (16) une chambre de pression de fermeture (A) du clapet principal et une chambre de pression d'ouverture (B) du clapet principal, caractérisé en ce que ladite chambre de fermeture (A) étant en communication avec l'enceinte (6) par un canal placé dans ledit corps (18), la chambre d'ouverture (B) communiquant avec la chambre de fermeture (A) par ledit canal du piston (60) et le clapet de pilotage (48), le piston (40) et le clapet principal (38) comportant une face (62) de surface $(S_b)$, dirigée vers la chambre d'ouverture (B), une face (58) de surface $(S_a)$, dirigée vers la chambre de fermeture (A) et une face (C) de surface $(S_c)$ dirigée vers l'enceinte (6), la surface $(S_a)$ étant supérieure à la surface $(S_c)$ et inférieure à la somme des surfaces $(S_b$ et $S_c)$, une valve (20) disposée dans ledit canal du corps (18) reliant la chambre de fermeture (A) à l'enceinte (6), ladite valve (20) comportant un orifice de passage supérieur (22) et un orifice de passage inférieur (24), et une bille (26), mobile à l'intérieur d'une cavité comprise entre lesdits orifices supérieur (22) et inférieur (24), ladite bille (26) étant apte à obturer l'orifice supérieur (22) en cas de surpression apparaîssant à l'intérieur de l'enceinte (6).

2. Soupape selon la revendication 1, caractérisée en ce qu'elle comporte des moyens pour tester la pression de tarage du clapet principal, ces moyens étant constitués par un robinet permettant de relier la chambre (A) à une source de pression (33) d'un fluide extérieur.

3. Soupape selon l'une quelconque des revendications 1 à 2, caractérisée en ce qu'elle comporte un robinet permettant de mettre la chambre (A) à l'atmosphère.

4. Soupape selon l'une quelconque des revendications 1 à 3, caractérisée en ce qu'elle comporte un robinet permettant d'isoler le canal (18) reliant la chambre (A) à l'enceinte (6).

5. Soupape selon la revendication 4, caractérisée en ce que le robinet permettant de mettre la chambre (A) à l'atmosphère, le robinet permettant de relier cette chambre (A) à la source de pression (33) d'un fluide extérieur et le robinet permettant d'isoler le canal reliant la chambre (A) à l'enceinte (6) sont réunis à l'intérieur d'un robinet à trois voies (28), l'une de ces voies (30) permettant de mettre la chambre (A) à l'atmosphère, la seconde voie (32) de relier la chambre (A) à la source de pression (33) d'un fluide extérieur, la troisième voie (34) permettant d'isoler le canal (18) reliant la chambre (A) à l'enceinte (6).

6. Soupape selon l'une quelconque des revendications 1 à 5, caractérisée en ce qu'elle comporte des moyens (78, 82) permettant de régler le tarage ou le déclenchement du clapet de pilotage (48) pendant le fonctionnement de la soupape de sûreté, ces moyens étant constitués par deux tiges concentriques disposées dans l'axe du clapet de pilotage et montées coulissantes et tournantes sur le corps de soupape (4), l'une de ces tiges (78) comportant des ergots (79) aptes à s'engager dans une rainure (56) du siège (50) de clapet de pilotage, l'autre tige (82) présentant un diamètre inférieur au diamètre intérieur du conduit central du siège (50) du clapet de pilotage.

7. Soupape selon l'une quelconque des revendications 1 à 6, caractérisée en ce que le diamètre extérieur de la chambre (A) est déterminé par un soufflet (74) raccordé au corps de soupape (4) à une extrémité et au piston (40) à son autre extrémité, ce souflet (74) formant avec la paroi intérieure du corps de soupape (4) un espace annulaire dans lequel est logé ledit ressort d'appui (75).

8. Soupape selon l'une quelconque des revendications 1 à 7, caractérisée en ce que la chambre (B) communique avec l'atmosphère par un canal de purge calibré (64), des moyens (68, 168) étant prévus pour obturer ledit canal (64) lorsque le clapet principal (38) est en position fermée, lesdits moyens s'ouvrant après la soupape principale et se fermant avant lui.

9. Soupape selon la revendication 8, caractérisée en ce que le clapet principal (38) comporte une partie (70) de plus petit diamètre déterminant un épaulement (72) et une rondelle (68) montée coulissante sur cette partie de plus petit diamètre (70), ladite rondelle (68) obturant le canal calibré (64) lorsque la soupape est en position fermée et dégageant ce canal (64) lorsque ledit épaulement vient en contact avec la rondelle (68) lors d'un mouvement d'ouverture de la soupape.

10. Soupape selon la revendication 8, caractérisée en ce que les moyens pour obturer le canal (64) mettant la chambre (B) en communication avec l'atmosphère sont constitués par un pointeau obturateur (168) monté coulissant dans un alésage (170) du piston (40), l'entrée du canal (64) formant un siège pour ledit pointeau obturateur (168), ce dernier étant maintenu élastiquement en appui contre ce siège, ledit pointeau comportant en outre une collerette (174) entraînée par la soupape dans son mouvement d'ouverture, de manière à soulever le pointeau obturateur de son siège lorsque la soupape s'ouvre.

**Patentansprüche**

1. Sicherheitsventil mit integrierter Pilotsteuerung für eine Hülle (6), die eine unter Druck stehende Flüssigkeit enthält, wobei das Ventil einen Ventilkörper (4), der mit einem Eingang (8) und einem Ausgang (10) für die Flüssigkeit und einem Kanal (18) versehen ist, wobei der Eingang (8) mit der Hülle (6) und der Ausgang (10) mit der Atmosphäre in Verbindung stehen, einen Sitz (12) zwischen dem Eingang und dem Ausgang, wobei der Körper (4) eine zylindrische Kammer (16) bildet, einen gleitend in dieser zylindrischen Kammer (16) angeordneten Kolben (40), ein unter dem Kolben (40) angeordnetes Hauptsperrventil (38), das in der Lage ist, den Sitz (12) zu verschließen, eine Stützfeder (75), um das Hauptsperrventil (38) auf den Sitz (12) zu drücken, ein Pilotsperrventil (48), das sich in einem Kanal (60) des Kolbens (40) befindet, und eine elastische Vorrichtung (54) aufweist, um das Pilotsperrventil (48) gegen seinen Sitz (50) zu drücken, wobei der Kolben (40) zusammen mit der zylindrischen Kammer (16) eine Druckverschlußkammer (A) des Hauptsperrventils und eine Drucköffnungskammer (B) des Hauptsperrventils bilden, dadurch gekennzeichnet, daß die Verschlußkammer (A) mit der Hülle (6) über einen in dem Körper angeordneten Kanal in Verbindung steht, und daß die Öffnungskammer (B) mit der Verschlußkammer (A) über den Kanal (60) des Kolbens und das Pilotsperrventil (48) in Verbindung steht, wobei der Kolben (40) und das Hauptsperrventil (38) eine Seite (62) der Oberfläche ($S_b$) aufweisen, die zur Öffnungskammer (B) gerichtet ist, eine Seite (58) der Oberfläche ($S_a$) aufweisen, die zur Verschlußkammer (A) gerichtet ist, und eine Seite (C) der Oberfläche ($S_c$) aufweisen, die zur Hülle (6) gerichtet ist, wobei die Oberfläche ($S_a$) größer als die Oberfläche ($S_c$) und kleiner als die Summe der Oberflächen ($S_b$ und $S_c$) ist, wobei ein in dem Kanal (18) des Körpers angeordnetes Ventil (20) die Verschlußkammer mit der Hülle verbindet, wobei das Ventil (20) eine obere Durchla Böffnung (22), eine untere Durchlaßöffnung (24) und eine Ventilkugel (26) aufweist, die innerhalb eines Hohlraumes zwischen der oberen (22) und der unteren (24) Öffnung beweglich ist und die geeignet ist, die obere Öffnung (22) im Falle eines im Inneren der Hülle (6) auftretenden Überdrucks zu verschließen.

2. Ventil nach Anspruch 1, dadurch gekennzeichnet, daß es eine Vorrichtung zum Testen des Abgleichdrucks des Hauptsperrventils aufweist, wobei diese Vorrichtung aus einem Hahn besteht, der es ermöglicht, die Kammer (A) mit einer Druckquelle (33) einer externen Flüssigkeit zu verbinden.

3. Ventil nach einem der Ansprüche 1 bis 3, dadurch gekennzeichnet, daß es einen Hahn aufweist, der es ermöglicht, die Kammer (A) mit der Atmosphäre zu verbinden.

4. Ventil nach einem der Ansprüche 1 bis 3, dadurch gekennzeichnet, daß es einen Hahn aufweist, der es ermöglicht, den Kanal (18), der die Kammer (A) mit der Hülle (6) verbindet, zu isolieren.

5. Ventil nach Anspruch 4, dadurch gekennzeichnet, daß der Hahn, der es ermöglicht, die Kammer (A) mit der Atmosphäre zu verbinden, der Hahn, der es ermöglicht, diese Kammer (A) mit der Druckquelle (33) einer externen Flüssigkeit zu verbinden, und der Hahn, der es ermöglicht, den Kanal, der die Kammer (A) mit der Hülle (6) verbindet, zu isolieren, im Innern eines Dreiwegehahn (28) vereinigt sind, wobei einer dieser Wege (30) ermöglicht, die Kammer (A) mit der Atmosphäre zu verbinden, der zweite Weg (32), die Kammer (A) mit der Druckquelle (33) einer externen Flüssigkeit zu verbinden und der dritte Weg (34), den Kanal, der die Kammer (A) mit der Hülle (6) verbindet, zu isolieren.

6. Ventil nach einem der Ansprüche 1 bis 5, dadurch gekennzeichnet, daß es eine Vorrichtung (78, 82) aufweist, die ermöglicht den Abgleich- oder den Auslösepunkt des Pilotsperrventils (48) während dem Betrieb des Sicherheitsventils zu regeln, wobei diese Vorrichtung aus zwei konzentrischen Schäften besteht, die in der Achse des Pilotsperrventils angeordnet sind und gleitend und drehbar auf den Ventilkörper (4) montiert sind, wobei einer dieser Schäfte (78) Nocken (79) aufweist, die geeignet sind in eine Rille (56) des Sitzes (50) des Pilotsperrventils einzurasten, und wobei der andere Schaft (82) einen geringeren Durchmesser hat als der innere Durchmesser des zentralen Gangs des Sitzes (50) des Pilotsperrventils.

7. Ventil nach einem der Ansprüche 1 bis 6, dadurch gekennzeichnet, daß der äußere Durchmesser der Kammer (A) durch ein Gebläse (74), das mit einem Ende mit dem Ventilkörper (4) und mit dem anderen Ende mit dem Kolben (40) verbunden ist, bestimmt wird, wobei dieses Gebläse (74) zusammen mit der inneren Wand des Ventilkörpers (4) einen ringförmigen Raum bildet, indem die Stützfeder (75) angeordnet ist.

8. Ventil nach einem der Ansprüche 1 bis 7, dadurch gekennzeichnet, daß die Kammer (B) mit der Atmosphäre über einen kalibrierten Entlüftungskanal (64) in Verbindung steht, wobei eine Vorrichtung (68, 168) vorgesehen ist, um den Kanal (64) zu verschließen, wenn das Hauptsperrventil (38) in der Verschlußposition ist, wobei diese Vorrichtung sich nach dem Hauptventil öffnet und sich vor ihm schließt.

9. Ventil nach Anspruch 8, dadurch gekennzeichnet, daß das Hauptsperrventil (38) einen Teil (70) mit kleineren Durchmesser, der eine Schulter (72) bildet, und eine Unterlegscheibe (68) aufweist, die gleitend auf dem Teil mit kleineren Durchmesser (70) montiert ist, wobei die Unterlegscheibe (68) den kalibrierten Kanal (64) verschließt, wenn das Ventil in der Verschlußstellung ist, und diesen Kanal (64) öffnet, wenn die Schulter in Berührung mit der Unterlegscheibe (68) bei einer Öffnungsbewegung des Ventils kommt.

10. Ventil nach Anspruch 8, dadurch gekennzeichnet, daß die Vorrichtung zum Verschließen des Kanals (64), der die Kammer (B) in Verbindung mit der Atmosphäre bringt, aus einer Verschlußdüsennadel (168) besteht, die gleitend in einer Bohrung (170) des Kolbens montiert ist, wobei der Eingang des Kanals (64) einen Sitz für die Verschlußdüsennadel (168) bildet, wobei letztere sich elastisch gegen den Sitz stützt, wobei die Düsennadel weiterhin einen Kragen (174) aufweist, der von dem Ventil in seiner Öffnungsbewegung so mitgezogen wird, daß er die Verschlußdüsennadel von ihrem Sitz hebt, wenn sich das Ventil öffnet.

**Claims**

1. Integrated control safety valve means for an enclosure (6) containing a pressurized fluid, the valve means comprising a valve body (4) provided with an inlet (8), an outlet (10) for the fluid and a channel (18), the inlet (8) communicating with the pressurized enclosure (6) and the outlet (10) being linked with the atmosphere, a seat (12) located between the inlet and the outlet, the body (4) defining a cylindrical chamber (16), a piston (40) slidingly mounted in the cylindrical chamber (16), a main valve (38) fixed beneath the piston (40) and able to close said seat (12), a bearing spring (75) for applying the main valve (38) to the seat (12), a control valve (48) located in the channel (60) of said piston (40), elastic means (54) for applying the control valve (48) to its seat (50), the piston (40) defining with the cylindrical chamber (16) a pressure chamber (A) for closing the main valve, a pressure chamber (B) for opening the main valve, characterized in that said chamber (A) is linked with the enclosure (6) by a channel placed in said body (18), the opening chamber (B) communicating with the closing chamber (A) by said channel of piston (60) and the control valve (48), the piston (40) and the main valve (38) having a face (62) of surface ($S_b$) directed towards the opening chamber (B), a face (58) of surface ($S_a$) directed towards the closing chamber (A) and a face C of surface ($S_c$) directed towards the enclosure (6), the surface ($S_a$) being larger than the surface ($S_c$) and smaller than the sum of the surfaces ($S_b$ and $S_c$), a valve (20) located in said channel of body (18) connecting the closing chamber (A) to the enclosure (6), said valve (20) having an upper passage orifice (22) and a lower passage orifice (24), as well as a ball (26) moving within a cavity located between said upper (22) and lower (24) orifices, said ball (26) being able to seal the upper orifice (22) in the case of an overpressure within the enclosure (6).

2. Valve means according to claim 1, characterized in that it incorporates means for testing the calibration pressure of the main valve, said means being constituted by a cock making it possible to connect chamber (A) to a pressure source (33) of an external fluid.

3. Valve means according to either of the claims 1 and 2, characterized in that it incorporates a cock making it possible to place the chamber (A) under atmospheric conditions.

4. Valve means according to any one of the claims 1 to 3, characterized in that it incorporates a cock making it possible to isolate the channel (18) connecting chamber (A) to enclosure (6).

5. Valve means according to claim 4, characterized in that the cock making it possible to place chamber (A) under atmospheric conditions, the cock making it possible to connect chamber (A) to the pressure source (33) of an external fluid and the cock making it possible to isolate the channel connecting chamber (a) to enclosure (6) are combined within a three-way cock (28), one of the said ways (30) making it possible to place chamber (A) under atmospheric conditions, the second way (32) connects chamber (A) to the pressure source (33) of an external fluid and the third way (34) makes it possible to isolate channel (18) connecting chamber (A) to enclosure (6).

6. Valve means according to any one of the claims 1 to 5, characterized in that it has means (78, 82) making it possible to regulate the calibration or release of the control valve (48) during the operation of the safety valve means, said means being constituted by two concentric rods located in the axis of the control valve and mounted in a sliding and rotary manner on the valve body (4), one of these rods (78) having lugs (79) able to engage in a groove (56) of the control valve seat (50), the other rod (82) having a diameter smaller than the internal diameter of the central duct of the control valve seat (50).

7. Valve means according to any one of the claims 1 to 6, characterized in that the external diameter of the chamber (A) is defined by a bellows (74) connected to the valve body (4) at one end and to the piston (40) at its other end, said bellows (74) forming with the inner wall of the cylinder body (4) an annular space in which is located said bearing spring (75).

8. Valve means according to any one of the claims 1 to 7, characterized in that the chamber (B) is linked to the atmosphere by a calibrated purge channel (64), means (68, 168) being provided for closing said channel (64) when the main valve (38) is in the closed position, said means opening after the main valve means and closing before the latter.

9. Valve means according to claim 8, characterized in that the main valve (38) has a smaller diameter part (70) defining a shoulder (72) and a washer (68) slidingly mounted on said smaller diameter part (70), said washer (68) closing the calibrated channel (64) when the valve means is in the closed position and freeing said channel (64) when the shoulder comes into contact with the washer (68) during the opening movement of the valve means.

10. Valve means according to claim 8, characterized in that the means for closing the channel (64) linking the chamber (B) with the atmosphere are constituted by a closing pin (168) slidingly mounted in a bore (170) of piston (40), the inlet of channel (64) forming a seat for said closing pin (168), the latter being maintained in elastically bearing manner against said seat, said pin having a collar (174) moved by the valve means in its opening movement, so as to raise the closing pin from its seat when the valve means opens.

# FIG. 1

FIG. 2

EP 0 227 541 B1